# FASCICULE DE BREVET EUROPEEN

(11) **EP 0 804 304 B1**
(45) Date de publication et mention de la délivrance du brevet: **23.08.2000**
(21) Numéro de dépôt: 96939129.1
(22) Date de dépôt: 15.11.1996
(51) Int. Cl.: B22C 7/02, C08J 9/00

(54) **MATIERE PLASTIQUE EXPANSEE OU EXPANSIBLE POUR LA FABRICATION DE MODELES DE FONDERIE PERDUS ET MODELES PERDUS COMPOSES D'UNE TELLE MATIERE**
EXPANDIERTES ODER EXPANDIERBARES PLASTIKMATERIAL FÜR DIE HERSTELLUNG VON VERLORENEN MODELLEN UND SO HERGESTELLTE MODELLE
EXPANDED OR EXPANSIBLE PLASTIC MATERIAL FOR THE FABRICATION OF SUNK FOUNDRY MODELS, AND SUNK MODELS COMPRISED OF SUCH MATERIAL

(30) Priorité: 16.11.1995 FR 9513612
(43) Date de publication de la demande: 05.11.1997
(73) Titulaire: Hüttenes-Albertus France S.A.R.L., 60723 Point-Sainte-Maxence Cédex (FR)
(72) Inventeur: BERTHELET, Emmanuel Huttenes-Albertus France, 309 F-60723 Pont-Sainte-Maxence Cédex (FR); BERTHELET, Michel Huttenes-Albertus France, 309 F-60723 Pont-Sainte-Maxence Cédex (FR); BHATTACHARYA, Asita Huttenes-Albertus France, 309 F-60723 Pont-Sainte-Maxence Cédex (FR)
(74) Mandataire: Breese, Pierre
(86) Numéro de dépôt international: FR9601809
(87) Numéro de publication internationale: WO9718048

(56) Documents cités:
- GB-A- 2 193 666
- US-A- 5 041 465
- PATENT ABSTRACTS OF JAPAN vol. 009, no. 092 (M-373), 20 Avril 1985 & JP 59 218239 A (YAMAKAWA KOGYO KK), 8 Décembre 1984,

## Description

La présente invention concerne le domaine de la fabrication de pièces de fonderie par moulage en modèle perdu.

Un premier procédé relevant de cette technique consiste à fabriquer un pain en matière plastique expansée, lequel sera façonné pour obtenir un modèle ayant la forme de la pièce métallique. Après aménagement des coulées et du bassin de coulée, constitués également en matière plastique expansée et rapportés par collage sur le modèle, le fondeur applique un enduit réfractaire en épaisseur uniforme sur le modèle, puis, après séchage de cet enduit, il positionne le modèle dans un châssis. Le moulage est réalisé en remplissant le châssis de sable lié avec un système de liant autodurcissant habituellement utilisée en fonderie, jusqu'à ce que le bassin de coulée affleure la partie supérieure du moule. Après la prise du sable, le fondeur peut procéder à la coulée de métal directement sur la matière plastique expansée.

Ce procédé connu sous la désignation générique de "modèle perdu" est plus particulièrement destiné à la fabrication de prototypes, de pièces unitaires ou en petites séries, généralement de grandes tailles.

Un second procédé relevant aussi de cette technique consiste à fabriquer par expansion d'une matière plastique expansible une série de modèles. Une grappe de modèles est obtenue par collage des modèles sur les coulées et le bassin de coulée. La grappe est alors immergée dans un enduit réfractaire ou arrosée d'un tel enduit et séchée à basse température; puis elle est placée dans des conteneurs métalliques et du sable sans liant est incorporé par vibration jusqu'au niveau supérieur du bassin de coulée. Le fondeur procède alors directement à la coulée de métal sur la matière plastique expansée.

Ce procédé connu sous la désignation anglaise de "lost foam" est plus particulièrement destiné à la fabrication de pièces répétitives de petites tailles ou de tailles moyennes.

On désignera dans ce qui suit par modèle perdu, les modèles en matière plastique utilisés dans ces deux procédés de fabrication de pièces de fonderie par moulage.

Ces procédés, bien connus des fondeurs, sont donc basés sur la disparition par gazéification du modèle en matière plastique expansée lors de la coulée du métal, ce dernier épousant la forme du moule pendant que le modèle se gazéifie et disparaît. Mais on constate souvent que les pièces fabriquées selon ces procédés présentent des défauts tels qu'un manque de métal localisé consécutif à des amas de carbone, ainsi que des modifications de l'analyse chimique du métal pour les alliages ferreux.

Les matières plastiques expansées ou expansibles utilisées pour la fabrication de modèles perdus sont constituées de copolymères ou de polymères tels que :
- Le polystyrène expansé à une densité de 20 g/litres, qui est le plus économique, mais qui possède le taux de carbone disponible le plus élevé ; d'autres polystyrènes de densité plus ou moins élevée peuvent aussi être utilisés.
- Le polyméthacrylate de méthyle, qui est généralement employé à une densité de 24 g/litre, dont le prix est beaucoup plus important que le polystyrène.

Bien que les procédés décrits précédemment soient très largement mis en oeuvre par les fondeurs, aucune explication aux difficultés rencontrées n'a encore été vraiment apportée. Il est toutefois probable que celles-ci soient liées au phénomène de gazéification de la matière plastique, composée essentiellement de carbone et d'hydrogène, constituant le modèle perdu, et qui se décompose sous l'effet de la température élevée du métal en fusion. Or, cette décomposition est précédée par un front liquide de matière plastique poussé par la pression métallostatique; en atmosphère réductrice, le craquage provoque la formation de dépôt de carbone connu par les fondeurs sous l'appellation "carbone brillant".

Pour les alliages ferreux à bas taux de carbone, tels que l'acier ordinaire, l'acier au carbone ou au manganèse, les aciers inox, spéciaux ou alliés, présentant une solubilité potentielle en carbone importante, le défaut résultant des procédés précédents est une reprise en carbone modifiant l'alliage.

Pour les alliages ferreux à taux de carbone élevé, telles que les fontes grises, blanches, à graphite sphéroïdale, alliées, la solubilité du carbone est insuffisante et les amas de carbone forment sur les côtés des pièces et surtout en plafond de moule, des marques de métal modifiant la forme prévue de la pièce, qui est alors inutilisable. En outre, des phénomènes de modification de la structure du métal peuvent être générés par le carbone solubilisé dans le métal liquide, en particulier, dans le cas de la fonte à graphite sphéroïdale, on peut observer une dégénérescence de la forme des nodules de graphite.

Pour les alliages légers et cuivreux, le métal n'ayant pas la possibilité de solubiliser le carbone, l'accumulation de celui-ci provoque des manques de matière rendant les pièces non conformes.

Les recherches effectuées dans ce domaine concernent essentiellement la structure des polymères expansés et leur vitesse de dépolymérisation et portent peu sur l'étude des fronts liquide/gaz et polymère/métal créés par la coulée de métal en fusion au contact de la matière plastique constituant le modèle

Or, les travaux réalisés par la Demanderesse ont concerné précisément cet aspect afin d'apporter aux fondeurs une solution à la défectuosité des pièces fabriquées par moulage en modèle perdu. Ainsi, la présente invention a pour but de créer aux interfaces liquide/gaz et polymère/métal une oxydation des liaisons carbone-hydrogène et carbone-carbone afin d'obtenir des gaz et non plus des solides, car le monoxyde de carbone (CO) et le dioxyde de carbone (CO₂) sont insolubles dans les métaux précités. Ce but a été atteint grâce à une matière plastique expansé ou expansible pour la fabrication de modèles de fonderie perdus, constituée d'un polymère ou d'un copolymère expansée ou expansible généralement utilisé pour la fabrication de tels modèles, associé à un agent oxydant.

L'invention concerne aussi les modèles perdus pour la fabrication de pièces de fonderie préparées à partir de la matière plastique précédente :
- soit par façonnage à la forme de la pièce à mouler d'un pain de matière plastique expansé constitué d'un polymère ou d'un copolymère expansé utile pour la fabrication de tels modèles, associé à un agent oxydant, dans le cadre du procédé dit "modèle perdu",
- soit par expansion, dans un moule ayant la forme de la pièce à mouler, d'une matière plastique expansible constitué d'un polymère ou d'un copolymère expansible utile pour la fabrication de tels modèles, associé à un agent oxydant, dans le cadre du procédé dit "lost foam".

Le brevet No. GB 2 193 666 suggère d'utiliser un agent oxydant choisi en fonction de la température à laquelle l'oxygène doit être libérée.

L'invention concerne donc une matière plastique expansée ou expansible pour la fabrication de modèles de fonderie perdus, contenant un agent oxydant capable de réaliser l'oxydation du carbone et de l'hydrogène de ladite matière plastique lors de la coulée de métal en fusion, constituée d'un polymère ou d'un copolymère expansé ou expansible généralement utilisé pour la fabrication de tels modèles, associé à un agent oxydant acceptant l'opération d'expansion sans altération substantielle de ses propriétés oxydantes, ne modifiant pas substantiellement les caractéristiques du polymère ou du copolymère auquel il est associé, avant, pendant et après l'expansion, caractérisé en ce que ledit agent oxydant ne nuit pas à la qualité du métal qui est coulé, et présente une température de décomposition sensiblement identique à celle du polymère ou du copolymère auquel il est associé .

L'étude menée par la Demanderesse sur les modifications de la matière plastique lors de la coulée du métal en fusion, lui ont permis de modéliser les phénomènes conduisant à la gazéification de celle-ci, en quatre zones de température différente correspondant chacune à un état de la matière plastique du modèle perdu:
a) Une zone très éloignée de la coulée de métal en fusion, où le polymère constituant la matière plastique n'est pas modifié;
b) Une zone moins éloignée que la précédente de la coulée de métal en fusion où le polymère constituant la matière plastique est transformée en oligomères;
c) Une zone moyenne, où a lieu la dépolymérisation totale du polymère, les oligomères étant transformés en monomères;
d) Une zone très chaude à proximité du front de la coulée de métal en fusion, où a lieu le craquage c'est à dire la combustion des monomères en carbone et hydrogène, dont une partie s'évacue à travers l'enduit dans le sable et une partie est gazéifiée sous l'action de la chaleur de la coulée. C'est à cette étape que se forme préférentiellement le carbone brillant, lequel se dépose sur la pièce en métal ou forme des amas sur les parois ou dans les coins du moule.

Le rôle de l'agent oxydant associé au polymère dans la matière plastique de l'invention, est de favoriser la gazéification du carbone et de l'hydrogène qui n'est pas évacué dans le sable à la dernière étape (d) de craquage. Il est donc nécessaire que l'agent oxydant présente une température de décomposition sensiblement identique à celle du polymère ou du copolymère auquel il est associé afin de permettre l'oxydation du carbone et de l'hydrogène de celui-ci à l'étape (d). En effet, si l'agent oxydant présente une température de fusion trop basse, il sera décomposé à une étape précédant la phase de cracking et donc ne pourra remplir son rôle.

Un des aspects avantageux de l'invention est de permettre l'association de l'agent oxydant et du polymère ou copolymère à tous les stades précédant l'opération d'expansion finale par la vapeur, et ainsi d'offrir au fondeur une matière plastique, soit déjà expansée et éventuellement façonnée et donc directement utilisable comme modèle, ou une matière plastique expansible, par exemple éventuellement pré-expansée, que le fondeur soumettra lui-même à l'opération finale d'expansion afin de préparer le modèle qui lui convient.

Avantageusement, la teneur en agent oxydant dans ladite matière plastique est comprise entre environ 5 et 50 % en poids, c'est à dire de 10 à 100 % du polymère ou copolymère de base (avant incorporation de l'agent oxydant).

Selon une première forme de réalisation de la matière plastique de l'invention, le polymère ou le copolymère et l'agent oxydant forme un copolymère.

Selon une deuxième forme de réalisation de la matière plastique de l'invention, le polymère ou le copolymère est mélangé à l'agent oxydant avant l'expansion. Le mélange peut être réalisé en plongeant les grains de polymère ou copolymère pré-expansé dans un bain liquide se présentant par exemple sous la forme d'une suspension ou d'une solution, contenant l'agent oxydant. Après mélange, les grains sont séchés puis soumis à l'expansion.

Ce mélange peut conduire à un enrobage ou une imprégnation du polymère ou copolymère par l'agent oxydant, mais tout autre technique d'association connue de l'homme du métier peut être réalisée, dès lors qu'elle ne modifie pas les propriétés de l'agent oxydant et du polymère. Il peut s'agir par exemple de dépôts électrostatiques.

A titre d'agent oxydant entrant dans la composition de la matière plastique expansée ou expansible de l'invention, on peut envisager tous les composés oxygénés, plus particulièrement nitrés, présentant les caractéristiques requises. On peut citer notamment les peroxydes ou les composés nitroaliphatiques, ou un mélange de ceux-ci.

Parmi les composés nitroaliphatiques utiles comme agent oxydant dans une matière plastique de l'invention, on préfère les nitroalcools et plus particulièrement ceux répondant à la formule générale: 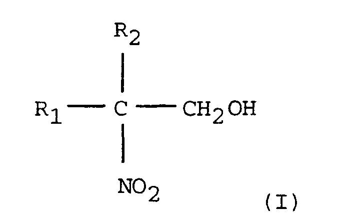 dans laquelle, R₁ et R₂ sont choisis chacun parmi : un atome d'hydrogène, un groupe de formule -(CH₂)OH, un alkyle inférieur, un groupe alicyclique ou aromatique, ou encore un groupe de formule : 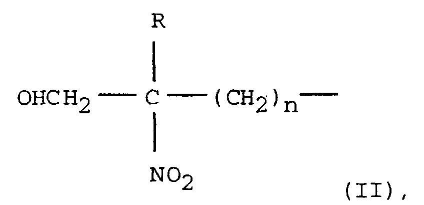 dans laquelle R a la même signification que R₁ ou R₂ et n est un nombre entier compris entre 1 et 6.

Des agent oxydants répondant à cette formule générale sont par exemple les suivants :
- Le 2-nitro-2-méthyl-1-propanol, de formule : 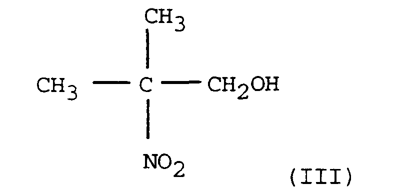 dont le point de fusion est de 94°C.
- Le 2-nitro-2-éthyl-1-3-propane-diol, de formule : 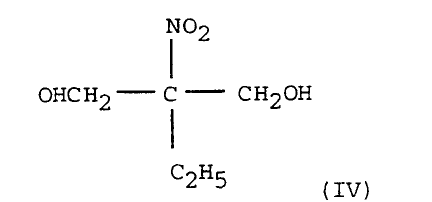 dont le point de fusion est d'environ 56°C.
- le Tris(hydroxyméthyl) nitrométhane, de formule : 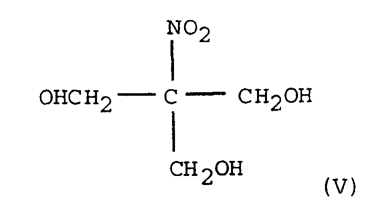 dont le point de fusion est d'environ 175°C.
- Le 2-nitro-2-méthyl-1,3-propane-diol, de formule : 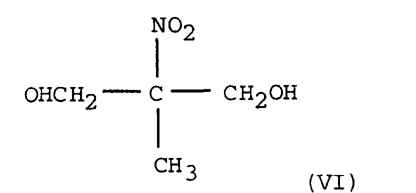 dont le point de fusion est d'environ 160°C.

Ces composés sont bien connus et disponibles dans le commerce, de même que les nitroalcools ayant plus d'un groupe nitro, dont on peut citer à titre d'exemples certains dinitro-alcools obtenus à partir des alpha-oméga-dinitroalcanes (Feuer, F. et al., TETRAHEDRON 1963, vol. 19, p. 57-54), tels que :
- le 2,5 bishydroxyméthyl;2,5-dinitro 1;6 hexandiol, de formule : 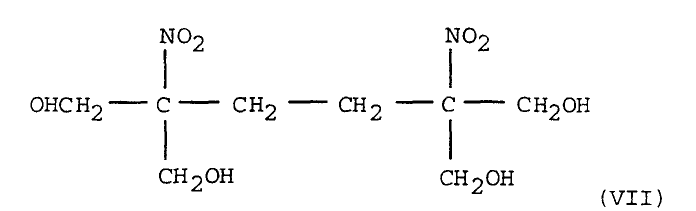 dont le point de fusion est de 122°C, ou
- le composé de formule : 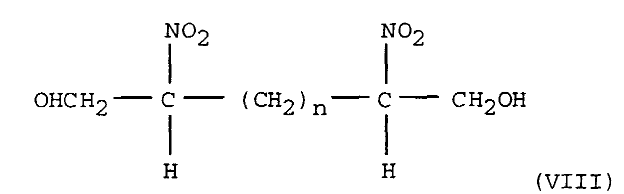 dont le point de fusion est de 163°C pour n = 2, et de 110°C pour n = 3.

Des composés nitroalcools préférés comme agent oxydant entrant dans la composition des matières plastiques expansées ou expansibles de l'invention, sont ceux dont le point de fusion est supérieur ou égal à 90 °C et qui sont miscibles dans un solvant et de préférence dans l'eau.

Le polymère expansé ou expansible auquel est associé l'agent oxydant dans la matière plastique de l'invention est le polystyrène (PS) ou le polyméthacrylate de méthyle (PMMA), ou tout autre polymère ou copolymère connus des fondeurs pour la fabrication de modèles perdus.

La dégradation thermique du PMMA commence à 160°C et sa vitesse de volatilisation augmente avec la température. La dépolymérisation est complète à environ 400°C et les produits de décomposition sont exclusivement des monomères. Avec l'augmentation de la température, le rendement en monomère diminue et les gaz formés subissent une pyrolyse à partir de 800°C. A 1200°C, les produits de la pyrolyse sont essentiellement : CH₄, C₂H₅, C₂H₄, C₃H₆, ainsi qu'une quantité importante de CO et de CO₂. Il ne reste aucun résidu à cette température, contrairement au polystyrène qui fournit environ 5 % de résidu.

Les études réalisées sur la pyrolyse du PS montrent que le rendement en monomère de styrène atteint son maximum autour de 500 à 700°C (Anal. Chem. 33, 1961, p. 873-898). Ce maximum coïncide avec la vitesse maximale de volatilisation. A 1300°C, la vitesse de formation des produits liquides est de l'ordre de 0,27 g/s cm² pour le PMMA et de 0,68 g/s cm2 pour le polystyrène expansé (AFS transactions, 95-153, p. 519-524, S. Shivkumar). Or, les produits liquides sont à l'origine de défaut sur les pièces. Avec l'augmentation de température, ces produits liquides favorisent des dépôts de carbone sur le métal. La présence de 2 atomes d'oxygène par unité de monomère dans la molécule de PMMA favorise la formation de CO et de CO₂ et diminue le taux de carbone disponible pour fabriquer du carbone brillant.

Les nitroalcools sont thermiquement instables à la température de décomposition du polystyrène. En raison de leur richesse en oxygène, ces nitroalcools se comportent comme des oxydants vis-à-vis du polystyrène au moment de la coulée du métal. L'oxydation du PS par les nitroalcools favorise la formation des gaz CO/CO₂ et diminue la formation des liquides à base d'oligomères ainsi que le taux de recarburation du métal. Le dépôt du carbone brillant est du même coup limité. L'emploi d'un agent oxydant associé au polymère dans une matière plastique conforme à l'invention, permet donc en outre de remplacer le PMMA, dont le prix est élevé, par le PS, dont le prix est plus faible.

L'invention concerne aussi un modèle de fonderie préparé avec une matière plastique expansée définie précédemment, ainsi que le procédé de préparation d'un tel modèle consistant :
- Soit à fabriquer un pain en matière plastique expansée définie précédemment, lequel sera façonné pour obtenir un modèle à la forme de la pièce à mouler.
- soit à procéder à l'expansion par la vapeur, dans un moule ayant la forme de la pièce à mouler, d'une matière plastique expansible définie précédemment.

L'invention concerne enfin un procédé de fabrication de pièces de fonderie par moulage en modèle perdu, mettant en oeuvre un modèle perdu défini ci-dessus.

D'autres caractéristiques et avantages de l'invention apparaîtront à la lecture des exemples qui suivent concernant la préparation et l'utilisation de matières plastiques de l'invention, étant entendu que ces exemples ne sauraient être interprétés comme tendant à réduire la portée des revendications.

Des grains de polystyrène ont été plongés dans des bains de 2-nitro-2-méthyl-1,3-propane-diol de formule (VI), afin d'obtenir après séchage des grains enrobés de cet agent oxydant, constituant des matières plastiques pré-expansées (expansibles) comprenant 5 %, 10 %, 15 % et 30 % de 2-nitro-2-méthyl-1,3-propane-diol.

Après injection et expansion, ces matières plastiques expansées (polystyrène densité de 20 g/litre) ont été façonnées pour préparer un modèle perdu de fonderie pour la fabrication de pièces en acier de 20 kg environ. Le poids du modèle est d'environ 68 g et il contient de l'ordre de 75 à 90 % de carbone, soit environ de 51 à 61 g de carbone.

Après préparation des modèles traités par un enduit réfractaire de zircon et aménagement des coulées et bassins de coulées, les pièces ont été coulées conformément aux techniques classiques connues des fondeurs.

Les pièces ainsi obtenues ont été comparées avec des pièces témoins similaires, fabriquées selon un procédé identique mais à partir d'un modèle perdu préparé avec une matière plastique expansée soit en polystyrène de densité 20 g/litre, soit en PMMA de densité 50 g/litre. La comparaison présentée dans le tableau I ci-dessous porte sur :
(1) la reprise en carbone sur pièces, c'est-à-dire la quantité additionnelle de carbone par rapport à la quantité dans le bain de métal, et
(2) le taux de carbone du modèle repris sur le métal de la pièce.

En outre, le tableau I ci-dessous, indique l'analyse chimique du bain métallique que l'on retrouve dans la pièce (Carbone à la coulée).

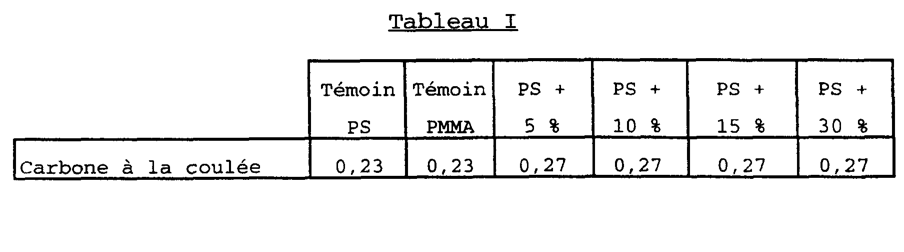

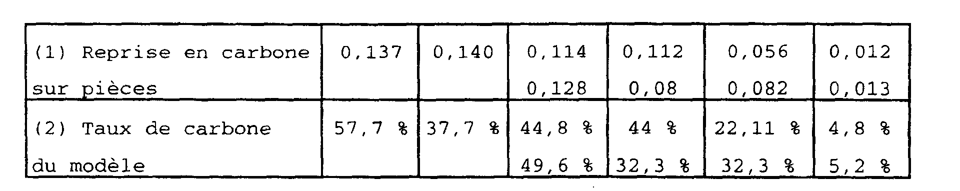

Deux pièces identiques ont été réalisées pour chaque taux d'agent oxydant dans la matière plastique. On observe sur chaque pièce une baisse du taux de carbone repris sur la pièce du fait de la gazéification du modèle. Cette baisse est d'autant plus significative que le taux d'agent oxydant dans la matière plastique est important.

Ces résultats montrent l'intérêt d'associer un agent oxydant au polymère constituant la matière plastique du modèle pour diminuer la formation de carbone brillant. L'emploi d'un tel agent oxydant permet en outre d'utiliser un polymère de moins bonne qualité mais de prix plus faible, tel que le polystyrène, au lieu par exemple du PMMA, et ainsi de compenser le surcoût que génère l'emploi de l'agent oxydant.

## Revendications

1. Matière plastique expansée ou expansible pour la fabrication de modèles perdus de fonderie, contenant un agent oxydant capable de réaliser l'oxydation du carbone et de l'hydrogène de ladite matière plastique lors de la coulée de métal en fusion, constituée d'un polymère ou d'un copolymère expansé ou expansible généralement utilisé pour la fabrication de tels modèles, associé à un agent oxydant acceptant l'opération d'expansion sans altération substantielle de ses propriétés oxydantes, ne modifiant pas substantiellement les caractéristiques du polymère ou du copolymère auquel il est associé, avant, pendant et après l'expansion, caractérisé en ce que ledit agent oxydant ne nuit pas à la qualité du métal qui est coulé, et présente une température de décomposition sensiblement identique à celle du polymère ou du copolymère auquel il est associé.

2. Matière plastique selon la revendication 1, caractérisée en ce que l'agent oxydant présente un point de fusion supérieur ou égal à 90 °C et est miscible dans un solvant et de préférence dans l'eau.

3. Matière plastique selon les revendications 1 et/ou 2, caractérisée en ce que la teneur en agent oxydant dans ladite matière plastique est comprise entre environ 5 et 50 % en poids.

4. Matière plastique selon l'une quelconque des revendications 1 à 3, caractérisée en ce que le polymère ou le copolymère et l'agent oxydant forment un copolymère.

5. Matière plastique selon l'une quelconque des revendications 1 à 3, caractérisée en ce quelle est constituée d'un polymère ou d'un copolymère expansible et d'un agent oxydant qui ont été mélangés avant l'expansion.

6. Matière plastique selon la revendication 5, caractérisée en ce que les grains de polymère ou de copolymère expansible sont enrobés par l'agent oxydant.

7. Matière plastique selon l'une quelconque des revendications précédentes, caractérisée en ce que l'agent oxydant est un composé oxygéné plus particulièrement nitré.

8. Matière plastique selon la revendication 7, caractérisée en ce que l'agent oxydant est un peroxyde ou un composé nitroaliphatique plus particulièrement un nitroalcool ou un mélange de ceux-ci.

9. Matière plastique selon la revendication 8, caractérisée en ce que l'agent oxydant est un nitroalcool répondant à la formule générale: 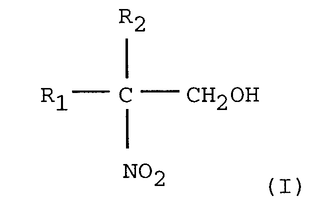 dans laquelle, R₁ et R₂ sont choisis chacun parmi : un atome d'hydrogène, un groupe de formule -(CH₂)OH, un alkyle inférieur, un groupe alicyclique ou aromatique, ou encore un groupe de formule : 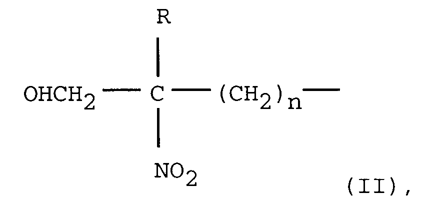 dans laquelle R a la même signification que R₁ ou R₂ et n est un nombre entier compris entre 1 et 6.

10. Matière plastique selon la revendication 9, caractérisée en ce que l'agent oxydant est choisi parmi : le 2-nitro-2-méthyl-1-propanol, le 2-nitro-2-éthyl-1-3-propane-diol, le Tris(hydroxyméthyl) nitrométhane, le 2-nitro-2-méthyl-1;3-propane-diol, le 2,5 bishydroxyméthyl;2,5-dinitro 1;6 hexandiol, les composés de formule : 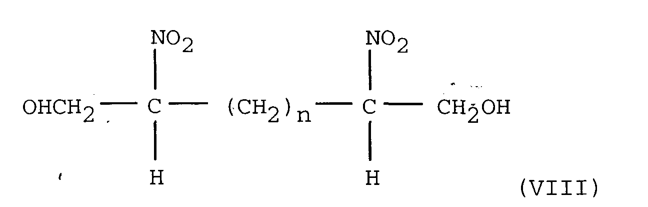 dans laquelle n est un nombre entier compris entre 0 et 6.

11. Modèle perdu de fonderie caractérisé en ce qu'il est en une matière plastique selon l'une quelconque des revendications 1 à 10.

12. Procédé de préparation d'un modèle perdu de fonderie caractérisé en ce que l'on fabrique un pain en matière plastique expansée selon l'une quelconque des revendications 1 à 10, que l'on façonne à la forme de la pièce à mouler.

13. Procédé de préparation d'un modèle perdu de fonderie caractérisé en ce que l'on procède à l'expansion par la vapeur, dans un moule ayant la forme de la pièce à mouler, d'une matière plastique expansible selon l'une quelconque des revendications 1 à 10.

14. Procédé de fabrication de pièces de fonderie par moulage en modèle perdu, caractérisé en ce qu'il met en oeuvre un modèle perdu selon la revendication 11.

## Patentansprüche

1. Expandierter oder dehnbarer Kunststoff für die Herstellung von verlorenen Giessereimodellen, mit einem Oxidierungsmittel, das in der Lage ist, den Kohlenstoff und den Wasserstoff des besagten Kunststoffs beim Guss von schmelzendem Metall zu oxidieren, bestehend aus einem Polymer oder einem expandierten oder dehnbaren Copolymer, das im allgemeinen für die Herstellung derartiger Modelle verwendet wird, verbunden mit einem Oxidierungsmittel, das die Expansionsoperation ohne substantielle Verschlechterung seiner Oxidierungs-Eigenschaften erträgt und die Merkmale des Polymers oder des Copolymers, mit denen es verbunden ist, während und nach der Expansion nicht substantiell verändert, dadurch gekennzeichnet, dass das besagte Oxidierungsmittel der Qualität des gegossenen Metalls nicht schadet und eine Zersetzungstemperatur aufweist, die etwa identisch mit derjenigen des Polymers oder Copolymers ist, mit denen es verbunden ist.

2. Kunststoff nach Anspruch 1, dadurch gekennzeichnet, dass das Oxidierungsmittel einen Schmelzpunkt von mindestens 90°C aufweist und in einem Lösemittel, vorzugsweise in Wasser, mischbar ist.

3. Kunststoff nach Anspruch 1, dadurch gekennzeichnet, dass der Oxidierungsmittelgehalt im besagten Kunststoff zwischen etwa 5 und 50 % Gewichtsanteilen beträgt.

4. Kunststoff nach einem der Ansprüche 1 bis 3, dadurch gekennzeichnet, dass das Polymer oder das Copolymer und das Oxidierungsmittel ein Copolymer bilden.

5. Kunststoff nach einem der Ansprüche 1 bis 3, dadurch gekennzeichnet, dass er aus einem Polymer oder einem dehnbaren Copolymer und einem Oxidierungsmittel besteht, die vor der Expansion gemischt wurden.

6. Kunststoff nach Anspruch 5, dadurch gekennzeichnet, dass die Körner des Polymers oder des dehnbaren Copolymers vom Oxidierungsmittel ummantelt werden.

7. Kunststoff nach einem der vorstehend genannten Ansprüche, dadurch gekennzeichnet, dass das Oxidierungsmittel eine sauerstoffhaltige und insbesondere eine nitrierte Verbindung ist.

8. Kunststoff nach Anspruch 7, dadurch gekennzeichnet, dass das Oxidierungsmittel ein Peroxid oder eine nitroaliphatische Verbindung, insbesondere ein Nitroalkohol oder eine Mischung derselben ist.

9. Kunststoff nach Anspruch 8, dadurch gekennzeichnet, dass das Oxidierungsmittel ein Nitroalkohol nach folgender allgemeiner Formel ist : 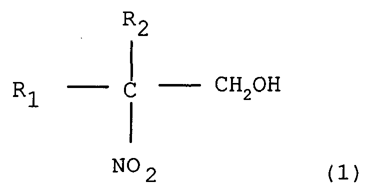 bei der R₁ und R₂ gewählt werden unter : einem Wasserstoffatom, einer Gruppe der Formel - (CH₂) OH, einem niedrigwertigen Alkyl, einer alizyklischen oder aromatischen Gruppe oder auch einer Gruppe der Formel : 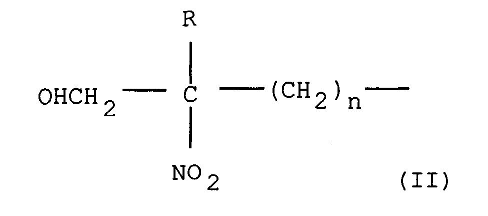 bei der R die gleiche Bedeutung hat wie R₁ oder R₂ und n eine Ganzzahl zwischen 1 und 6 ist.

10. Kunststoff nach Anspruch 9, dadurch gekennzeichnet, dass das Oxidierungsmittel gewählt wird unter : 2-Nitro-2-Methyl-1-Propanol, 2-Nitro-2-Ethyl-1-3-Propan-Diol, Tri(hydroxymethyl) Nitromethan, 2-Nitro-2-Methyl-1;3-Propan-Diol, 2,5 Bishydroxymethyl; 2,5-Dinitro 1;6 Hexandiol, den Bestandteilen der Formel : 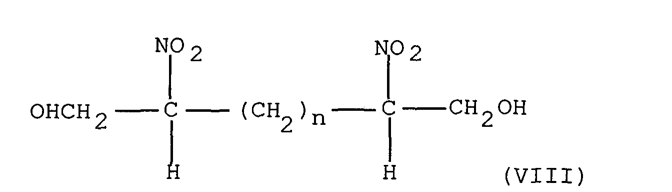 bei der n eine Ganzzahl zwischen 0 und 6 ist.

11. Verlorenes Giessereimodell, dadurch gekennzeichnet, dass es aus einem Kunststoff nach einem der Ansprüche 1 bis 10 besteht.

12. Vorbereitungsverfahren eines verlorenen Giessereimodells, dadurch gekennzeichnet, dass man eine Masse aus expandiertem Kunststoff nach einem der Ansprüche 1 bis 10 herstellt, die man entsprechend der Form des zu formenden Teils fassoniert.

13. Vorbereitungsverfahren eines verlorenen Giessereimodells, dadurch gekennzeichnet, dass man in einer dem zu formenden Teil entsprechenden Form einen dehnbaren Kunststoff nach einem der Ansprüche 1 bis 10 durch Dampf expandiert.

14. Herstellungsverfahren von Giessereiteilen durch Formerei mit verlorenem Modell, dadurch gekennzeichnet, dass man ein verlorenes Modell nach Anspruch 11 verwendet.

## Claims

1. Expanded or expansive plastic material for the production of disposable casting models, containing an oxidising agent able to conduct oxidation of the carbon and hydrogen of said plastic material during the casting of molten metal, made up of a polymer or an expanded or expansive copolymer generally used for the production of said models, associated with an oxidising agent accepting the expansion operation with no substantial deterioration of its oxidising properties, not substantially altering the characteristics of the polymer or copolymer with which it is associated, before, during and after expansion, characterised in that said oxidising agent is not detrimental to the quality of the cast metal and has a decomposition temperature that is substantially identical to that of the polymer or copolymer with which it is associated.

2. Plastic material according to claim 1, characterised in that the oxidising agent has a melting point of 90°C or over and is miscible in a solvent, preferably water.

3. Plastic material according to claims 1 and/or 2, characterised in that the oxidising agent content of said plastic material is approximately between 5 and 50 % by weight.

4. Plastic material according to any of claims 1 to 3, characterised in that the polymer or copolymer and the oxidising agent form a copolymer.

5. Plastic material according to any of claims 1 to 3, characterised in that it is formed of a polymer or an expansive copolymer and of an oxidising agent which were mixed before expansion.

6. Plastic material according to claim 5, characterised in that the polymer or expansive copolymer grains are coated with the oxidising agent.

7. Plastic material according to any of the preceding claims, characterised in that the oxidising agent is an oxygenated, more particularly a nitrated, compound.

8. Plastic material according to claim 7, characterised in that the oxidising agent is a peroxide or a nitro-aliphatic compound, more particularly a nitro-alcohol or a mixture of the latter.

9. Plastic material according to claim 8, characterised in that the oxidising agent is a nitro-alcohol meeting the general formula: 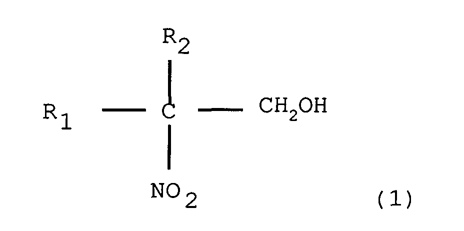 in which R₁ and R₂ are chosen from among : a hydrogen atom, a group with the formula -(CH₂)OH, a lower alkyl, an alicyclic or aromatic group, or further a group with the formula : 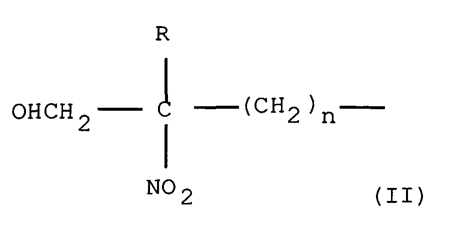 in which R has the same significance as R₁ or R₂ and n is a whole number between 1 and 6.

10. Plastic material according to claim 9, characterised in that the oxidising agent is chosen from among : 2-nitro-2-methyl-1-propanol, 2-nitro-2-ethyl-1-3-propanediol, Tris(hydroxymethyl) nitromethane, 2-nitro-2-methyl-1;3-propane-diol, 2,5 bishydroxymethyl;2,5-dinitro 1;6 hexandiol, compounds having the formula : 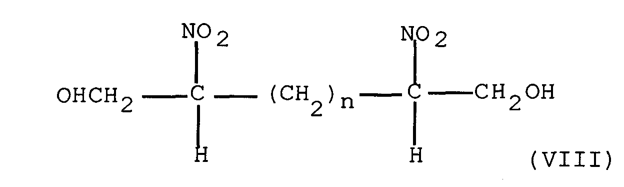 in which n is a whole number lying between 0 and 6.

11. Disposable casting model, characterised in that it is in a plastic material according to any of claims 1 to 10.

12. Method for preparing a disposable casting model, characterised in that a block of expanded plastic material is made in accordance with any of claims 1 to 10, and in that it is shaped to the form of the item to cast.

13. Method for preparing a disposable casting model, characterised in that expansion is made using steam in a mould having the shape of the item to be cast and made in an expansive plastic material, according to any of claims 1 to 10.

14. Method for producing cast items by moulding in a disposable model, characterised in that it uses a disposable model according to claim 11.
